# EUROPEAN PATENT SPECIFICATION

(11) **EP 1 471 458 B1**
(45) Date of publication and mention of the grant of the patent: **08.10.2008**
(21) Application number: 04009530.9
(22) Date of filing: 22.04.2004
(51) Int. Cl.: G06K 9/62, G06K 9/00

(54) **FIngerprint authentication system and method**
System und Verfahren zum Authentifizieren von Fingerbabdrücken
Système et procédé d'authentification d'empreintes digitales

(30) Priority: 25.04.2003 JP 2003121538; 02.12.2003 JP 2003403129
(43) Date of publication of application: 27.10.2004
(73) Proprietor: NEC CORPORATION, Tokyo (JP)
(72) Inventor: Ohba, Akitomo, Minato-ku Tokyo (JP)
(74) Representative: Betten & Resch

(56) References cited:
- WO-A-91/08555
- WO-A-02/095552
- US-A- 4 461 028
- US-A1- 2002 154 793
- XUDONG JIANG ET AL: "ONLINE FINGERPRINT TEMPLATE IMPROVEMENT" IEEE TRANSACTIONS ON PATTERN ANALYSIS AND MACHINE INTELLIGENCE, IEEE SERVICE CENTER, LOS ALAMITOS, CA, US, vol. 24, no. 8, August 2002 (2002-08), pages 1121-1126, XP001144040 ISSN: 0162-8828
- ANONYMOUS: "SUPERVISED ADAPTION FOR SIGNATURE VERIFICATION SYSTEM" IBM TECHNICAL DISCLOSURE BULLETIN, IBM CORP. NEW YORK, US, vol. 21, no. 1, June 1978 (1978-06), pages 424-425, XP002050796 ISSN: 0018-8689
- PATENT ABSTRACTS OF JAPAN vol. 1998, no. 03, 27 February 1998 (1998-02-27) & JP 09 297845 A (MITSUBISHI ELECTRIC CORP), 18 November 1997 (1997-11-18)

## Description

### BACKGROUND OF THE INVENTION

### Field of the Invention:

The present invention relates to a fingerprint authentication system and a fingerprint authentication method for personal authentication.

### Description of the Related Art:

Conventionally, a personal authentication function, represented by a password, has been used as a login function of a personal computer or for settlement in electronic commerce dealings. As this authentication function, various techniques have been known. The techniques include, for example, an authentication technique by inputting knowledge such as a password, as stated above, and a biometrics authentication technique using a biological feature. Although the authentication technique using personal knowledge such as the password is easy to operate, the technique has disadvantages in that the personal knowledge tends to be forgotten and stolen. In order that particularly high authentication accuracy is to be realized, the number of figures should be increases, thereby disadvantageously, considerably deteriorating user-friendliness.

The biometrics authentication technique using a feature peculiar to each living body such as a fingerprint, a voiceprint, a face, or an iris, by contrast, has advantages in that the biological feature is difficult to lose and forget, and difficult for others to steal. The fingerprinting authentication system is the most promising authentication system among the conventional authentication systems from viewpoints of price, size, and authentication accuracy.

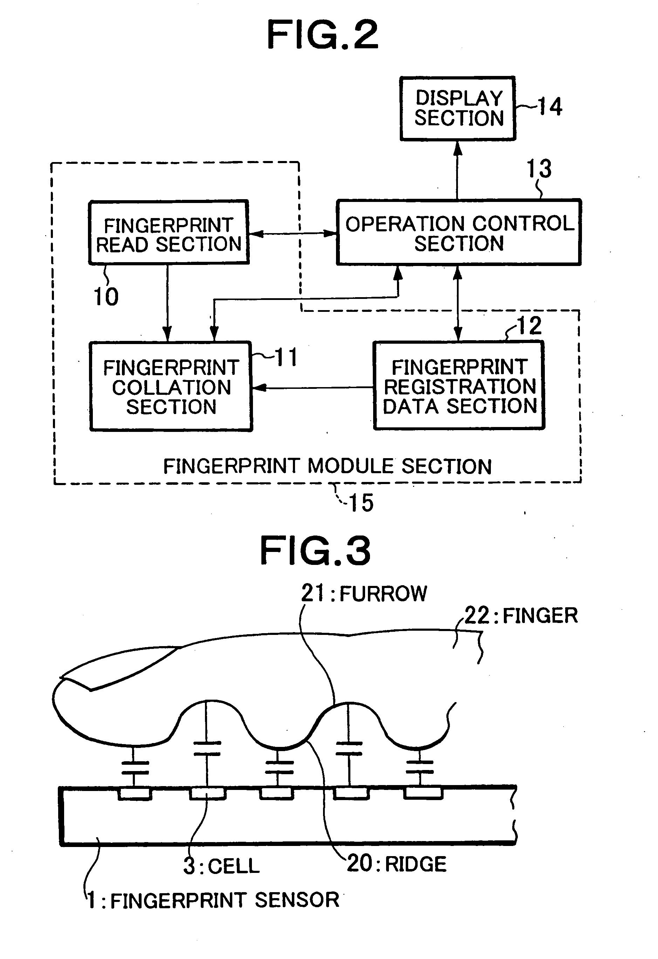

According to the fingerprint authentication technique, a fingerprint is authenticated by detecting a pattern or a feature of fingerprint ridge parts (ridges). The fingerprint authentication system includes at least a fingerprint authentication module comprised of a fingerprint sensor section and an authentication section that authenticates whether a fingerprint detected by the fingerprint sensor section matches to one of registered fingerprints. The sensor includes microscopic sensor pixel cells arranged at a pitch of 50 to 100 microns and detect ridges and furrows of a fingerprint. Various methods are provided as a detection method for this fingerprint sensor. A capacitance method, an optical method, and the like are mainly known. According to the capacitance method, for example, an Si semiconductor element is employed as a substrate as shown in Fig. 3. Each cell detects a capacitance based on a distance and a contact area between a finger surface and the substrate, whereby the ridges and furrows of the finger are detected and a fingerprint pattern is detected.

According to the conventional fingerprint authentication system, fingerprint registration is made first. In the registration processing, a finger is put on a fingerprint read section that serves as a fingerprint sensor, fingerprint data is detected, and the detected fingerprint data is registered in a fingerprint registration data section. In an authentication processing after the registration processing, the finger is put on the fingerprint sensor and the fingerprint data is detected similarly to the registration processing, followed by the transmission of the detected fingerprint data to a fingerprint collation section. The detected fingerprint data is compared and collated with all pieces of fingerprint data already registered in the fingerprint registration data section. If fingerprint data that matches to the detected fingerprint data is present, authentication results in a success. If there is no matching fingerprint data, authentication results in a failure. These fingerprint collation procedures are carried out under control of an operation control section, and an authentication result is displayed on a display section.

Technical literatures relating to the present invention are as follows:
Japanese Patent Application Laid-Open No. 09-171547
Japanese Patent Application Laid-Open No. 09-198501
Japanese Patent Application Laid-Open No. 09-297845
Japanese Patent Application Laid-Open No. 11-312225
Japanese Patent No. 2875053

In recent years, cellular phones have rapidly spread and it is predicted that articles will be purchased and accounts of the articles are settled through the cellular phones in electronic commerce in the future. The cellular phones are used by users of all ages, as compared with personal computers. Conventionally, electronic commerce was intended for adults, fingerprint patters of whom have less change. In contrast, the cellular phones are used even by children. Since children are in a growth process, their fingerprint sizes increase. As a result, it is difficult to collate fingerprint data on each child with fingerprint data previously registered. Further, in an environment in which a finger is worked too hard, a fingerprint of the finger is damaged and a fingerprint surface changes with the passage of time. As a result, there is a case where the fingerprint collation cannot be performed.

Examples of prior art documents which perform a fingerprint template update such as to compensate for the above factors include :
- X. Jiang and W.Ser - "Online Fingerprint Template Improvement", IEEE Trans. PAMI, Vol. 24, No. 8, August 2002
- the patent document WO 02/095552 A2 - Imprivata Inc, published on 28. 11. 2002
- the patent document US 2002/0154 793 A1- R. Hillhouse, J. Boyer, published on 24.10.2002

### SUMMARY OF THE INVENTION

It is an object of the present invention to provide a fingerprint authentication system capable of preventing deterioration of authentication accuracy even for a child in a growth process or a person with a finger surface having dramatic change.

According to a first aspect of the present invention, there is provided a fingerprint authentication system comprising: a fingerprint registration data section in which pieces of fingerprint data are registered; a fingerprint read section which reads one fingerprint data; a fingerprint collation section which inspects whether fingerprint data that matches or almost matches to the fingerprint data read by the fingerprint read section is registered in the fingerprint registration data section; and a control section which replaces the fingerprint data that is registered in the fingerprint registration data section and that matches or almost matches to the fingerprint data read by the fingerprint read section, with the fingerprint data read by the fingerprint read section if the fingerprint data that matches or almost matches to the fingerprint data read by the fingerprint read section is registered in the fingerprint registration data section.

According to a second aspect of the present invention, there is provided a fingerprint authentication system comprising: a fingerprint registration data section in which pieces of fingerprint data are registered; a fingerprint read section which reads one fingerprint data; a fingerprint collation section which inspects whether fingerprint data that matches or almost matches to the fingerprint data read by the fingerprint read section is registered in the fingerprint registration data section; and a control section which registers the fingerprint data read by the fingerprint read section in the fingerprint registration data section additionally to the fingerprint data that is registered in the fingerprint registration data section and that matches or almost matches to the fingerprint data read by the fingerprint read section if the fingerprint data that matches or almost matches to the fingerprint data read by the fingerprint read section is registered in the fingerprint registration data section.

The fingerprint authentication system according to the second aspect may further comprises: deletion means for deleting the fingerprint data having a general similarity that is highest among the pieces of fingerprint data registered in the fingerprint registration data section, from the fingerprint registration data section.

The fingerprint authentication system according to the second aspect may further comprise: general similarity calculation means for calculating similarities between each of the pieces of fingerprint data registered in the fingerprint registration data section and the fingerprint data other than the each fingerprint data, respectively, and for calculating the general similarity based on the similarities.

According to the present invention, whenever authentication succeeds, one of the fingerprint data registered in the fingerprint registration data section is replaced by the fingerprint data input by the fingerprint read section or the fingerprint data input by the fingerprint read section is added to the fingerprint data registered in the fingerprint registration data section. As a result, each time a user uses the system, the fingerprint data registered in the fingerprint registration data section changes. Therefore, it is possible to authenticate even fingerprint data on a child in a growth process without deteriorating authentication accuracy.

In addition, the fingerprint data varies every season according to a roughness, a temperature, a hardness, and the like of a skin. However, by adding the fingerprint data input by the fingerprint read section to the data registered in the fingerprint registration data section as stated above, in order to accumulate fingerprint data on each season, it is possible to match registered fingerprint data during a season when the authentication is performed, to the authentication target fingerprint data, and to stably authenticate the fingerprint data without any influence of a seasonal change in the fingerprint.

Furthermore, according to the conventional fingerprint authentication system, registered fingerprint data having a high similarity to the already registered fingerprint data is discovered so as to improve fingerprint collation performance. In contrast, according to the present invention, by deleting the fingerprint data having a high general similarity from the fingerprint registration data section, the fingerprint data having low general similarities are left in the fingerprint registration data section. This means that the fingerprint data having low mutual similarities are left in the fingerprint registration data section. Therefore, the fingerprint registration data section stores the fingerprint data various in patterns. Accordingly, the fingerprint of even the same person that changes in a various manner according to growth, seasons, and conditions can be detected with high accuracy

### BRIEF DESCRIPTION OF THE DRAWINGS

Fig. 1 is a flow chart which illustrates the principle of a fingerprint authentication system according to one embodiment of the present invention;
Fig. 2 is an explanatory view for the configuration of the fingerprint authentication system according to the present invention;
Fig. 3 is an explanatory view for the principle of a capacitance type fingerprint sensor; and
Fig. 4 is a flow chart which illustrates the principle of a fingerprint authentication system according to another embodiment of the present invention.

### DESCRIPTION OF THE PREFERRED EMBODIMENTS

Preferred embodiments of the present invention will be described hereinafter in detail with reference to the drawings.

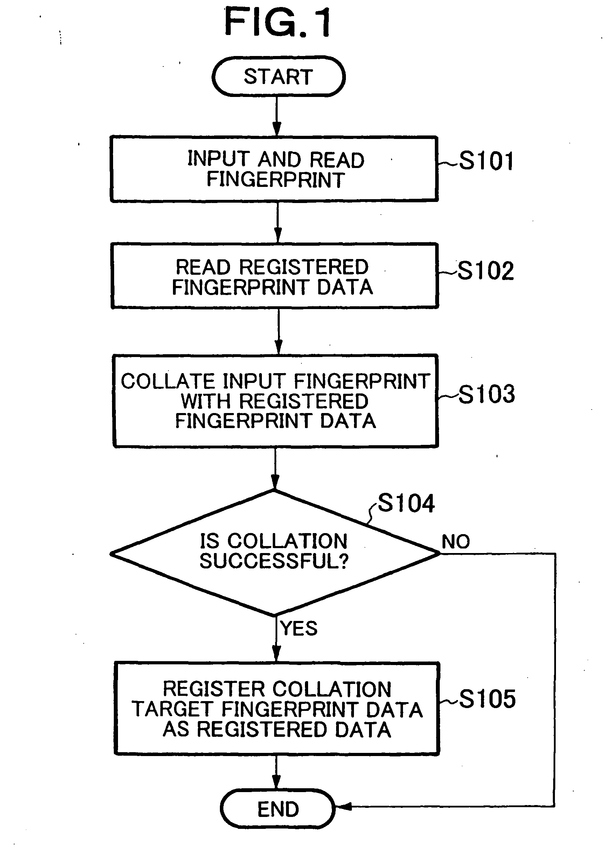

Fig. 2 is a system block diagram which illustrates the configuration of a fingerprint authentication system according to the present invention. Fig. 1 illustrates an authentication operation of the fingerprint authentication system.

According to this system, fingerprint registration is made first. In the registration processing, fingerprint data is detected from a finger put on a fingerprint read section 10 that serves as a fingerprint sensor, and the detected fingerprint data is registered in a fingerprint registration data section 12.

In an authentication processing after the registration processing, the fingerprint data is detected from the finger put on the fingerprint sensor similarly to the registration processing (in a step S101). The fingerprint data is transmitted to a fingerprint collation section 11. The fingerprint collation section 11 reads all pieces of fingerprint data already registered in the fingerprint registration data section 12 (in a step S102), and compares and collates these pieces of fingerprint data with the present fingerprint data detected by the fingerprint read section 10 (in a step S103). If fingerprint data that matches or almost matches, or is similar, to the present fingerprint data detected by the fingerprint read section 10 is already registered in the fingerprint registration data section 12, authentication results in a success ("YES" in a step S104). Here, "almost match" means that the general similarity, which will be described later, is the same as or more than a prescribed threshold. If such fingerprint data is not registered, the authentication results in a failure ("NO" in the step S104). These fingerprint collation procedures are controlled by an operation control section 13, and an authentication result is displayed on a display section 14. In case of the successful authentication, the fingerprint data registered in the fingerprint registration data section 12 and determined to match or almost match to the present fingerprint data is replaced by the present fingerprint data detected by the fingerprint read section 10, and the present fingerprint data is registered in the fingerprint registration data section 12. Alternatively, the present fingerprint data detected by the fingerprint read section 10 may be registered in the fingerprint registration data section 12 as additional fingerprint data (in the step S105).

If data replacement is carried out, each registered fingerprint data and a registrant have a one-to-one correspondence in a database. If data addition is carried out, registered fingerprint data and a registrant have a many-to-one correspondence. Even in the latter case, similarly to the former case, the authentication target fingerprint data is compared and collated with all pieces of fingerprint data in the database, and the registrant corresponding to the fingerprint data closest to the authentication target fingerprint data among the fingerprint data in the database is determined as an authentication target person.

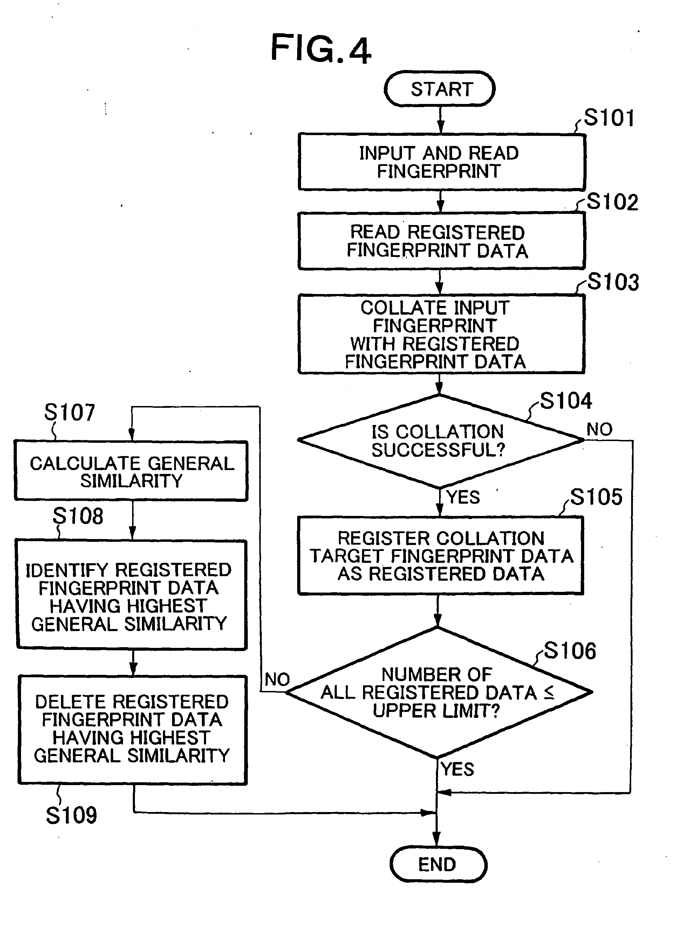

If data addition is carried out, it is necessary to limit the number of registered fingerprint data to be equal to or less than a certain number. If such a limitation is not set, authentication time unavoidably, considerably increases and the registered fingerprint data exceed a storage capacity of the fingerprint registration data section 12. Therefore, if the number of registered fingerprint data reaches the certain number, it is important that a part of registered fingerprint data is to be deleted from the fingerprint registration data section 12. The second embodiment of the present invention will be described with reference to Fig. 4. In Fig. 4, steps S101 to S105 are the same as those described above with reference to Fig. 1. It is assumed herein that an upper limit of the number of registered fingerprint data is m. In a step S106, if authentication succeeds and the number of all the registered fingerprint data is equal to or smaller than m ("YES" in the step S106), the processing is finished. If the authentication succeeds and the number of all the registered fingerprint data exceeds m (actually, the number is (m+1)) ("NO" in the step S106), a processing for deleting one out of all the registered fingerprint data is performed. In a step S107, a general similarity of each of all the registered fingerprint data is calculated. The general similarity will be described later. In a step S108, the registered fingerprint data having the highest general similarity is identified. In a step S109, the fingerprint data having the highest general similarity is deleted from all the registered fingerprint data, the number of registered fingerprint data is decreased to m, and the processing is finished.

It is noted that the steps S107 to S109 are executed by the operation control section 13.

The calculation of the general similarity will next be described. The calculation of the similarity between two pieces of registered fingerprint data among all (m+1) pieces of registered fingerprint data is performed for all combinations of the selection of two pieces of data from among all the (m+1) pieces of data. As a result of the calculation, m similarities are determined for each fingerprint data. The general similarity of each fingerprint data is calculated based on the m similarities. For example, the general similarity is set as a sum of the m similarities of each fingerprint data. Alternatively, the general similarity of each fingerprint data is set as a mean square of the m similarities thereof. Further, the general similarity may be calculated by applying various other calculation formulas to the m similarities.

As described so far, according to the present invention, fingerprint detection can be utilized for personal authentication. In summary, an embodiment of the invention can be described as follows:

This invention provides a fingerprint authentication system capable of preventing deterioration of personal authentication accuracy for authentication of a finger of a child in a growth process. The fingerprint authentication system includes a fingerprint registration section in which pieces of fingerprint data are registered, a fingerprint read section which reads one fingerprint data, a fingerprint collation section which inspects whether fingerprint data that matches or almost matches to the fingerprint data read by the fingerprint read section is registered in the fingerprint registration data section and a control section which replaces the fingerprint data that is registered in the fingerprint registration data section and that matches or almost matches to the fingerprint data read by the fingerprint read section with the fingerprint data read by the fingerprint read section or which adds the fingerprint data read by the fingerprint read section to the fingerprint data that is registered in the fingerprint registration data section and that matches or almost matches to the fingerprint data read by the fingerprint read section.

## Claims

1. A fingerprint authentication system comprising:
a fingerprint registration data section (12) in which fingerprint data of a plurality of people are registered;
a fingerprint read section (10) which reads present fingerprint data of a person;
a fingerprint collation section (11) which inspects whether fingerprint data that matches or almost matches to the present fingerprint data is registered with the fingerprint registration data section; **characterized in that** it furthermore comprises:
a control section (13) which, if fingerprint data that matches or almost matches to the present fingerprint data, is registered with the fingerprint registration data section, registers the present fingerprint data in the fingerprint registration data section additional to the registrant specific fingerprint data that is registered with the fingerprint registration data section and that matches or almost matches to the present fingerprint data; and
deletion means for deleting the fingerprint data having a general similarity that is highest among the registrant specific fingerprint data registered in the fingerprint registration data section (12), from the fingerprint registration data section (12).

2. The fingerprint authentication system according to claim 1, further comprising:
general similarity calculation means for calculating similarities between each of the fingerprint data registered in the fingerprint registration data section (12) and the fingerprint data other than the each fingerprint data, respectively, and for calculating the general similarity based on the similarities.

3. A fingerprint authentication method comprising:
a registration step of registering fingerprint data of a plurality of people in a fingerprint registration data section (12);
a read step of reading present fingerprint data of a person;
a fingerprint collation step of inspecting whether fingerprint data that matches or almost matches to the present fingerprint data is registered with the fingerprint registration data section (12); **characterized in that** it furthermore comprises:
an additional step of, if fingerprint data that matches or almost matches to the present fingerprint data is registered with the fingerprint registration data section (12), registering the present fingerprint data in the fingerprint registration data section (12) additionally to the registrant specific fingerprint data that is registered with the fingerprint registration data section and that matches or almost matches to the present fingerprint data; and
a deletion step of deleting the fingerprint data having a general similarity that is highest among the registrant specific fingerprint data registered in the fingerprint registration data section (12), from the fingerprint registration data section (12).

4. The fingerprint authentication method according to claim 3, further comprising:
a general similarity calculation step of calculating similarities between each of the fingerprint data registered in the fingerprint registration data section (12) and the fingerprint data other than the each fingerprint data, respectively, and for calculating the general similarity based on the similarities.

## Patentansprüche

1. Fingerabdruckauthentifizierungssystem, umfassend
einen Fingerabdruckregistrierungsdatenabschnitt (12), in welchem Fingerabdruckdaten einer Mehrzahl von Personen registriert sind;
einen Fingerabdruckleseabschnitt (10), der gegenwärtige Fingerabdruckdaten einer Person liest;
einen Fingerabdruckvergleichsabschnitt (11), der untersucht, ob Fingerabdruckdaten in dem Fingerabdruckregistrierungsdatenabschnitt registriert sind, die mit den gegenwärtigen Fingerabdruckdaten übereinstimmen oder annähernd übereinstimmen; **dadurch gekennzeichnet, dass** es weiterhin umfasst:
einen Steuerabschnitt (13), der, wenn Fingerabdruckdaten in dem Fingerabdruckregistrierungsdatenabschnitt registriert sind, die mit den gegenwärtigen Fingerabdruckdaten übereinstimmen oder annähernd übereinstimmen, die gegenwärtigen Fingerabdruckdaten in den Fingerabdruckregistrierungsdatenabschnitt zusätzlich zu den registriererspezifischen Fingerabdruckdaten, die in dem Fingerabdruckregistrierungsdatenabschnitt (12) registriert sind und die mit den gegenwärtigen Fingerabdruckdaten übereinstimmen oder annähernd übereinstimmen, in dem Fingerabdruckregistrierungsdatenabschnitt registriert; und
ein Löschmittel zum Löschen von Fingerabdruckdaten aus dem Fingerabdruckregistrierungsdatenabschnitt (12), die eine generelle Ähnlichkeit haben, die unter den registriererspezifischen Fingerabdruckdaten die höchste ist, die in dem Fingerabdruckregistrierungsdatenabschnitt (12) registriert sind.

2. Fingerabdruckauthentifizierungssystem nach Anspruch 1, weiterhin umfassend:
ein Berechnungsmittel der generellen Ähnlichkeit zum Berechnen von Ähnlichkeiten zwischen jedem der Fingerabdruckdaten, die in dem Fingerabdruckregistrierungsdatenabschnitt (12) registriert sind, und den Fingerabdruckdaten, die anders als jede entsprechenden Fingerabdruckdaten sind, und zum Berechnen der generellen Ähnlichkeit basierend auf den Ähnlichkeiten.

3. Fingerabdruckauthentifizierungsverfahren umfassend:
einen Registrierungsschritt zum Registrieren von Fingerabdruckdaten einer Mehrzahl von Personen in einem Fingerabdruckregistrierungsdatenabschnitt (12);
einen Leseschritt zum Lesen von gegenwärtigen Fingerabdruckdaten einer Person;
einen Fingerabdruckvergleichsschritt zum Untersuchen, ob Fingerabdruckdaten in dem Fingerabdruckregistrierungsdatenabschnitt (12) registriert sind, die mit den gegenwärtigen Fingerabdruckdaten übereinstimmen oder annähernd übereinstimmen; **dadurch gekennzeichnet, dass** es weiterhin umfasst:
einen zusätzlichen Schritt zum Registrieren der gegenwärtigen Fingerabdruckdaten in dem Fingerabdruckregistrierungsdatenabschnitt (12) zusätzlich zu den registriererspezifischen Fingerabdruckdaten, die in dem Fingerabdruckregistrierungsdatenabschnitt registriert sind und die mit den gegenwärtigen Fingerabdruckdaten übereinstimmen oder annähernd übereinstimmen, wenn Fingerabdruckdaten in dem Fingerabdruckregistrierungsdatenabschnitt registriert sind, die mit den gegenwärtigen Fingerabdruckdaten übereinstimmen oder annähernd übereinstimmen; und
einen Löschschritt zum Löschen von Fingerabdruckdaten aus dem Fingerabdruckregistrierungsdatenabschnitt (12), die eine generelle Ähnlichkeit haben, die unter den registriererspezifischen Fingerabdruckdaten die höchste ist, die in dem Fingerabdruckregistrierungsdatenabschnitt (12) registriert sind.

4. Fingerabdruckauthentifizierungsverfahren nach Anspruch 3, weiterhin umfassend:
einen Berechnungsschritt der generellen Ähnlichkeit zum Berechnen von Ähnlichkeiten zwischen jedem der Fingerabdruckdaten, die in dem Fingerabdruckregistrierungsdatenabschnitt (12) registriert sind, und den Fingerabdruckdaten, die anders als jede entsprechenden Fingerabdruckdaten sind, und zum Berechnen der generellen Ähnlichkeit basierend auf den Ähnlichkeiten.

## Revendications

1. Système d'authentification d'empreintes digitales comprenant :
une section de données d'enregistrement d'empreintes digitales (12) dans laquelle les données d'empreintes digitales d'une pluralité de personnes sont enregistrées ;
une section de lecture d'empreintes digitales (10) qui lit les données d'empreintes digitales présentes d'une personne ;
une section de rapprochement d'empreintes digitales (11) qui examine si oui ou non des données d'empreintes digitales qui correspondent ou correspondent presque aux données d'empreintes digitales présentes sont enregistrées avec la section de données d'enregistrement d'empreintes digitales ; **caractérisé en ce qu'**il comprend en outré :
une section de contrôle (13) qui, si des données d'empreintes digitales qui correspondent ou correspondent presque aux données d'empreintes digitales présentes sont enregistrées avec la section de données d'enregistrement d'empreintes digitales, enregistre les données d'empreintes digitales présentes dans la section de données d'enregistrement d'empreintes digitales en plus des données d'empreintes digitales spécifiques à la personne s'inscrivant qui sont enregistrées avec la section de données d'enregistrement d'empreintes digitales et qui correspondent ou correspondent presque aux données d'empreintes digitales présentes ; et
des moyens de suppression pour supprimer les données d'empreintes digitales ayant une similitude générale qui est la plus élevée parmi les données d'empreintes digitales spécifiques à la personne s'inscrivant enregistrées dans la section de données d'enregistrement d'empreintes digitales (12), de la section de données d'enregistrement d'empreintes digitales (12).

2. Système d'authentification d'empreintes digitales selon la revendication 1, comprenant en outré
des moyens de calcul de similitude générale pour calculer les similitudes entre chacune des données d'empreintes digitales enregistrées dans la section de données d'enregistrement d'empreintes digitales (12) et les données d'empreintes digitales autres que la chacune des données d'empreintes digitales, respectivement, et pour calculer la similitude générale sur la base des similitudes.

3. Procédé d'authentification d'empreintes digitales comprenant :
une étape d'enregistrement consistant à enregistrer les données d'empreintes digitales d'une pluralité de personnes dans une section de données d'enregistrement d'empreintes digitales (12) ;
une étape de lecture consistant à lire les données d'empreintes digitales présentes d'une personne ;
une étape de rapprochement d'empreintes digitales consistant à examiner si oui ou non des données d'empreintes digitales qui correspondent ou correspondent presque aux données d'empreintes digitales présentes sont enregistrées avec la section de données d'enregistrement d'empreintes digitales (12) ; **caractérisé en ce qu'**il comprend en outré :
une étape supplémentaire consistant, si des données d'empreintes digitales qui correspondent ou correspondent presque aux données d'empreintes digitales présentes sont enregistrées avec la section de données d'enregistrement d'empreintes digitales (12), à enregistrer les données d'empreintes digitales présentes dans la section de données d'enregistrement d'empreintes digitales (12) en plus des données d'empreintes digitales spécifiques à la personne s'inscrivant qui sont enregistrées avec la section de données d'enregistrement d'empreintes digitales et qui correspondent ou correspondent presque aux données d'empreintes digitales présentes ; et
une étape de suppression consistant à supprimer les données d'empreintes digitales, ayant une similitude générale qui est la plus élevée parmi les données d'empreintes digitales spécifiques à la personne s'inscrivant enregistrées dans la section de données d'enregistrement d'empreintes digitales (12), de la section de données d'enregistrement d'empreintes digitales (12).

4. Procédé d'authentification d'empreintes digitales selon la revendication 3, comprenant en outré :
une étape de calcul de similitude générale consistant à calculer les similitudes entre chacune des données d'empreintes digitales enregistrées dans la section de données d'enregistrement d'empreintes digitales (12) et les données d'empreintes digitales autres que la chacune des données d'empreintes digitales, respectivement, et pour calculer la similitude générale sur la base des similitudes.
